# FASCICULE DE BREVET EUROPEEN

(11) **EP 2 461 224 B1**
(45) Date de publication et mention de la délivrance du brevet: **15.10.2014**
(21) Numéro de dépôt: 11354066.0
(22) Date de dépôt: 10.11.2011
(51) Int. Cl.: G05G 1/02, G05G 1/08, G05G 1/10, B60K 37/06

(54) **Dispositif d'actionnement à voyant et bouton poussoir comportant un tel dispositif**
Betätigungsvorrichtung mit Sichtmelder, und mit einer solchen Vorrichtung ausgestatteter Druckknopf
Actuator device with pilot lamp and push button comprising such a device

(30) Priorité: 03.12.2010 FR 1004714
(43) Date de publication de la demande: 06.06.2012
(73) Titulaire: Schneider Electric Industries SAS, 92500 Rueil-Malmaison (FR)
(72) Inventeur: Debarnot, Miguel, 38050 Grenoble Cedex 09 (FR); Glas, Carine, 38050 Grenoble Cedex 09 (FR)
(74) Mandataire: Tripodi, Paul

(56) Documents cités:
- DE-A1-102008 031 366
- US-A1- 2006 214 778

## Description

### DOMAINE TECHNIQUE

L'invention concerne un dispositif d'actionnement à voyant comportant :
- une partie fixe servant de corps de boitier,
- une partie mobile susceptible de se déplacer entre une position de repos et au moins une position active, et
- un voyant de visualisation d'un état.

L'invention concerne aussi un bouton poussoir comportant un support, une partie coulissante par rapport au support et un ressort de rappel vers une position de repos disposé entre la partie mobile et le support.

### ETAT DE LA TECHNIQUE

Les dispositifs d'actionnement à voyants connus comportent généralement des lampes, des diodes électroluminescentes ou d'autres types de voyants tels que des afficheurs à cristaux liquides. La plupart des ces voyants nécessitent une alimentation électrique fournie par un réseau électrique ou par des piles ou des batteries rechargeables. De plus, lorsque les voyants sont associés à des boutons poussoirs, la commande de signalisation des voyants est fournie par des circuits de traitement complexes alimentés aussi par des sources d'énergies externes.

Ainsi, les dispositifs d'actionnement à voyants de l'état de la technique sont rarement autonomes en ce qui concerne la signalisation d'un état de commande. D'autres dispositifs peuvent être autonomes mais nécessitent aussi des sources d'énergie locales permanentes telles que des piles.
Les documents DE102008031366 (D1) et US2006/214778 (D2) décrivent de tels dispositifs de l'état de la technique selon le préambule de la revendication 1.

### EXPOSE DE L'INVENTION

L'invention a pour but un dispositif d'actionnement à voyants autonome, ainsi qu'un bouton poussoir comportant un tel dispositif.

Un dispositif d'actionnement à voyant selon l'invention est défini dans la revendication 1.

Avantageusement, ledit afficheur à deux états stables est un afficheur à cristaux liquides ayant deux couleurs ou aspects différents correspondant à chaque état stable et gardant son état après chaque commande.

Dans un mode de réalisation particulier, ledit afficheur à deux états stables est commandé pour un premier état stable lorsqu'une tension de commande ayant une première amplitude est supérieure à un premier seuil de tension et est commandé pour un second état stable lorsqu'une tension de commande ayant une seconde amplitude est dans une plage comprise entre un second seuil bas et une limite haute inférieure audit premier seuil.

De préférence, ledit élément générateur de tension est constitué d'une lame en matériau piézoélectrique.

Avantageusement, ladite lame est déformable et fournit des tensions électriques dépendantes des distances de déplacement ou des déformations.

Dans un mode de réalisation préférentiel, lesdites deux distances de déplacement sont destinées à actionner deux déformations de ladite lame, une première déformation générant ladite première amplitude de tension électrique de commande et une seconde déformation générant ladite seconde amplitude de tension électrique de commande.

De préférence, ladite lame est composée d'une structure multicouche comportant au moins une couche de lignes parallèle alternées de matériau piézoélectrique et d'isolant, de deux couches métalliques conductrices, et d'au moins une couche de polyimide.

De préférence, ladite lame a une largeur comprise entre 5 et 30 millimètres et une longueur comprise entre 3 et 8 centimètres.

Avantageusement, lesdits moyens de contrôle de déplacement comportent un système à crémaillère rotatif changeant de longueur de course à chaque action, ledit système comportant deux parties à dents complémentaires opérant une rotation lors du relâchement d'une action de commande.

De préférence, le dispositif comporte des moyens de traitement électroniques connectés audit élément générateur de tension électrique et/ou audit voyant de visualisation d'état.

Avantageusement, ledit voyant de visualisation d'état est disposé sur ladite partie mobile.

Un bouton poussoir selon l'invention comportant un support, une partie coulissante par rapport au support et un ressort de rappel vers une position de repos disposé entre la partie mobile et le support comporte un dispositif d'actionnement à voyant tel que défini ci-dessus dans lequel la partie mobile est associée à la partie coulissante, la partie fixe est associés au support, ledit voyant de visualisation est visible à travers une face avant de la partie coulissante, et lesdits moyens de contrôle de déplacement sont disposés en périphérie de la partie coulissante en contact avec le support.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma mécanique d'un dispositif et d'un bouton poussoir selon un mode de réalisation de l'invention ;
- la figure 2 représente une séquence de déformation d'une lame de générateur de tension électrique dans un dispositif selon un mode de réalisation de l'invention
- la figure 3 représente un dispositif selon un second mode de réalisation de l'invention signalant un premier état inactif ;
- les figures 4A à 4C représentent un cycle de passage à la signalisation d'un état actif d'un dispositif selon la figure 3 ;
- la figure 5 représente un dispositif selon un second mode de réalisation de l'invention signalant un second état actif ;
- les figures 6A à 6C représentent un cycle de passage à la signalisation d'un état inactif d'un dispositif selon la figure 5 ;
- les figures 7A à 7D représentent un schéma d'un mécanisme à crémaillère pour le contrôle de déplacement d'une partie mobile par rapport à une partie fixe dans un dispositif selon un mode de réalisation de l'invention ;
- la figure 8 représente la structure d'une lame d'un générateur de tension électrique pour un dispositif selon un mode de réalisation de l'invention ;
- la figure 9 représente un schéma électrique d'un dispositif selon un mode de réalisation de l'invention ;
- les figures 10 et 11 représentent des courbes de tensions électriques pour les commandes de signalisation d'états actif ou inactif respectivement.

### DESCRIPTION DETAILLEE DE MODES DE REALISATION PREFERES

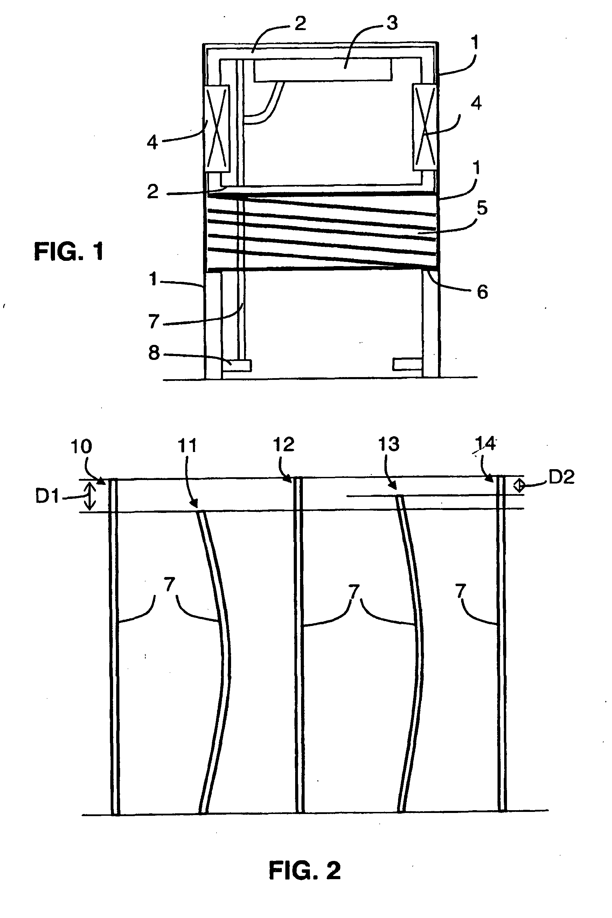

La figure 1 représente un schéma mécanique d'un dispositif et d'un bouton poussoir selon un mode de réalisation. Ce dispositif comporte une partie fixe 1 servant de corps de boitier, une partie mobile 2 susceptible de se déplacer entre une position de repos et au moins une position active, et un voyant 3 de visualisation d'un état. Le dispositif comporte aussi un système 4 de contrôle de déplacement de la partie mobile par rapport à la partie fixe 1 pour contrôler séquentiellement au moins deux distances de déplacement différentes entre deux actions consécutives. Un ressort de rappel 5 disposé entre la partie mobile et une butée 6 de la partie fixe maintient la partie mobile en position de repos. Selon l'invention, le dispositif comporte au moins un élément générateur 7 de tension électrique disposé entre la partie mobile 2 et une butée 8 de la partie fixe 1. Ledit élément générateur peut recevoir au moins deux contraintes ou déformations dépendantes des deux distances de déplacement. Le voyant de visualisation 3 d'état est connecté audit élément générateur 7 de tension. Le voyant comporte ou est constitué d'un afficheur à deux états stables, par exemple, un afficheur à cristaux liquides ayant deux couleurs différentes correspondant à chaque état stable et gardant son état après chaque commande. Ledit voyant 3 de visualisation d'état est disposé de préférence sur la partie mobile 2.

La figure 2 représente une séquence de déformation d'un élément générateur de tension électrique dans un dispositif selon un mode de réalisation de l'invention. L'élément générateur 7 de tension est constitué d'une lame 7 en matériaux piézoélectrique. La lame 7 est déformable et fournit des tensions électriques dépendantes des distances de déplacement. Les deux distances de déplacement sont destinées à actionner deux déformations de ladite lame, une première déformation générant une première amplitude de tension électrique de commande et une seconde déformation générant une seconde amplitude de tension électrique de commande. Sur la séquence de la figure 2, une première position 10 montre une lame 7 en position de repos. Puis dans une position 11, la lame 7 est déformée avec une première distance de déformation D1 élevée. Dans ce cas, l'élément générateur fournit une tension ayant une première amplitude de tension électrique de commande élevée. Une position 12 montre un retour à l'état de repos sans déformation. Dans la position 13, la lame 7 est déformée avec une seconde distance D2 de déformation D1 faible. Dans ce cas, l'élément générateur fournit une tension ayant une seconde amplitude de tension électrique de commande faible. Une position 14 montre de nouveau un retour à l'état de repos sans déformation. Après une déformation ou une contrainte et un retour en position de repos la lame peut engendrer des oscillations mécaniques amorties avec le temps.

Ainsi, dans un bouton poussoir selon un mode de réalisation de l'invention la partie mobile 2 est associée une partie coulissante, la partie fixe 1 est associée à un support, le voyant de visualisation est visible à travers une face avant de la partie coulissante 2, et le système 4 de contrôle de déplacement est disposé en périphérie de la partie coulissante en contact avec le support.

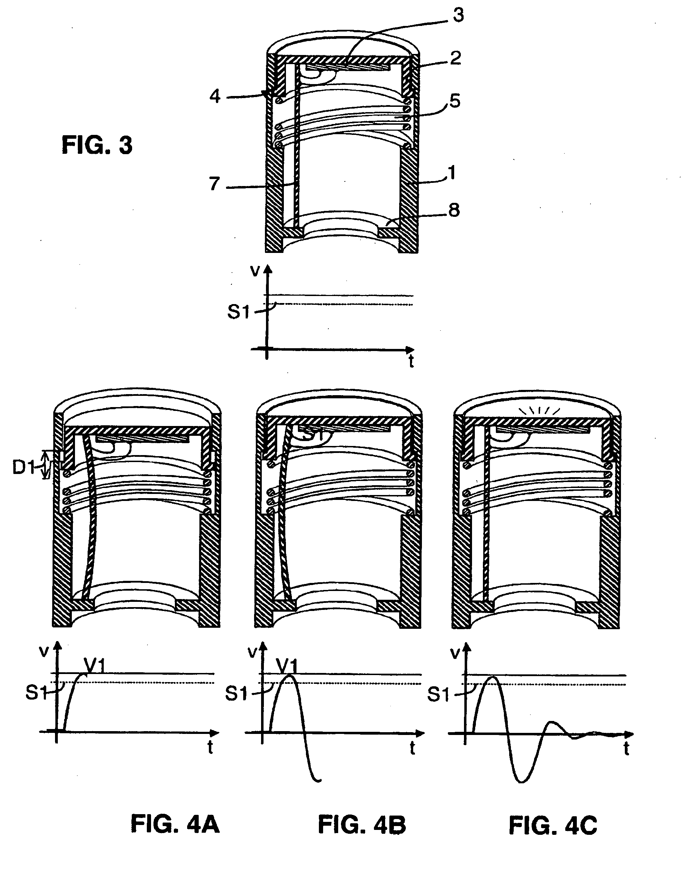

La figure 3 représente un dispositif selon un second mode de réalisation de l'invention signalant un premier état inactif et une courbe de tension électrique fournie par l'élément générateur associée à la position. La lame au repos ne génère pas de tension électrique. Les figures 4A à 4C représentent un cycle de passage à la signalisation d'un état actif d'un dispositif selon la figure 3. Sur la figure 4A, une action sur la partie mobile applique une distance de déformation élevée D1 et une tension électrique d'amplitude V1 est fournie par la lame 7. Sur la figure 4B la partie mobile est relâchée et le ressort la ramène dans la position de repos. La lame oscille et fournit une tension alternative amortie. L'amplitude de la première alternance de tension V1 dépasse le seuil de tension S1 et fait basculer le voyant dans la signalisation d'un second état actif représenté sur la figure 4C.

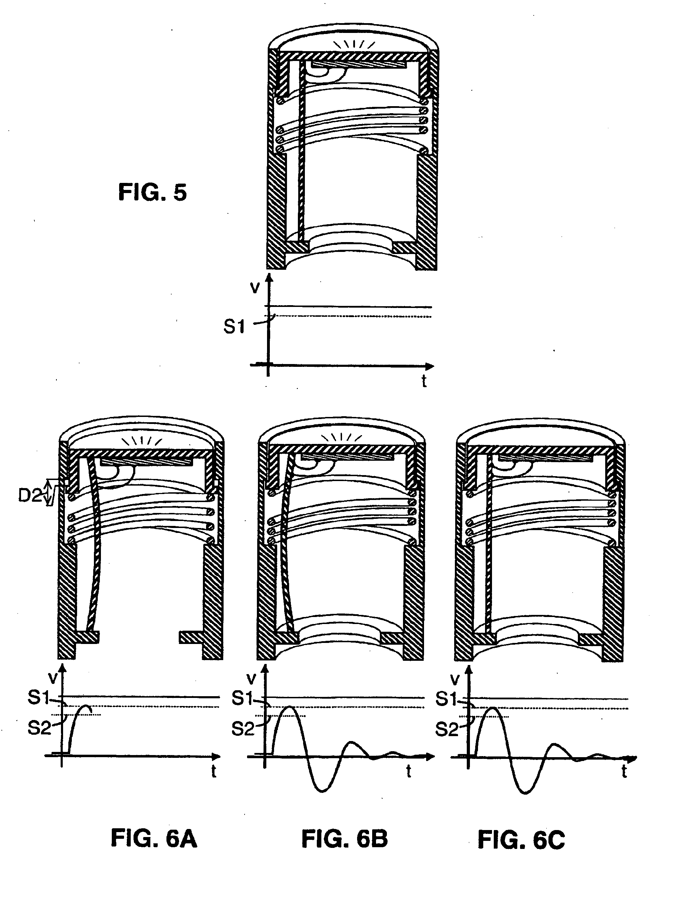

La figure 5 représente un dispositif selon un second mode de réalisation de l'invention signalant un second état actif et une courbe de tension électrique fournie par l'élément générateur associée à la position. La lame au repos ne génère pas de tension électrique. Les figures 6A à 6C représentent un cycle de passage à la signalisation d'un état inactif d'un dispositif selon la figure 5. Sur la figure 6A, une action sur la partie mobile applique une distance de déformation faible D2 et une tension électrique d'amplitude V2 est fournie par la lame 7. Sur la figure 6B, la partie mobile est relâchée et le ressort la ramène dans la position de repos. La lame oscille et fournit une tension alternative amortie. L'amplitude de la première alternance de tension V2 dépasse un seuil bas de tension S2 sans atteindre le premier seuil haut S1. Cette tension dont l'amplitude est comprise entre un seuil S2 et une limite haute S3 inférieure au seuil haut S1 fait basculer le voyant dans la signalisation un état inactif représenté sur la figure 6C.

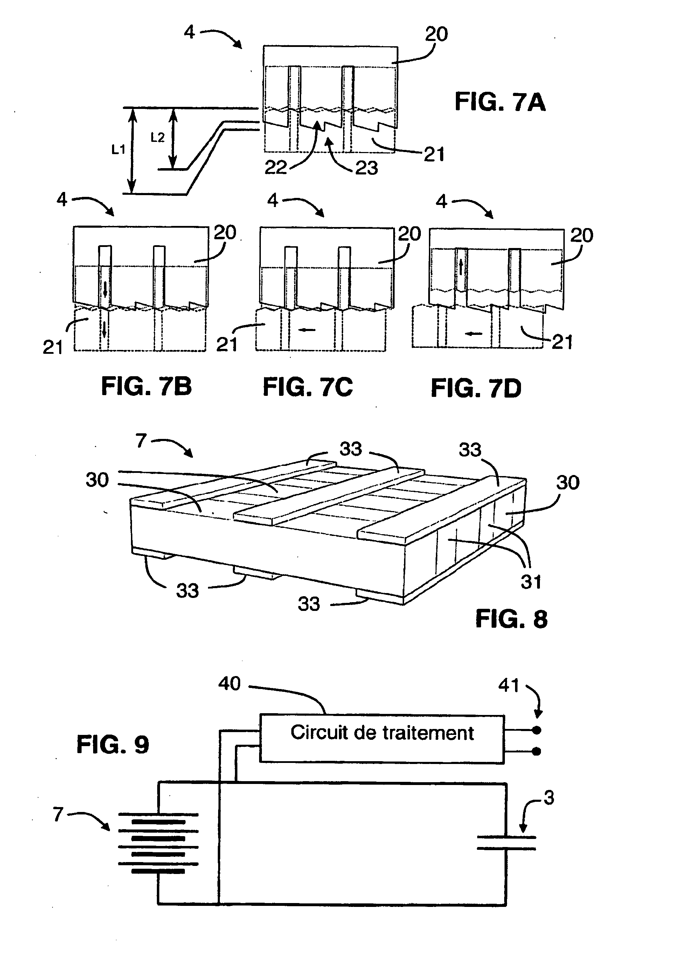

Les figures 7A à 7D représentent un schéma d'un système 4 de contrôle de déplacement de la partie mobile par rapport à la partie fixe 1 comportant un mécanisme à crémaillère. Le mécanisme à crémaillère rotatif change alternativement de longueur de course à chaque action. Il comporte deux parties 20 et 21 à dents complémentaires 22 et 23 opérant une rotation lors du relâchement d'une action de commande. Ainsi, ce mécanisme permet de générer deux courses de longueurs différentes L1 et L2. Sur la figure 7A, les dents 22 et 23 des parties 20 et 21 sont imbriquées dans une première position formant un assemblage compact. Dans cette position, le système 4 autorise une course de déplacement L1 élevée pour permettre au générateur à lame de fournir une première tension V1 élevée. Sur la figure 7B, le mécanisme est relâché. Le retour en arrière, représenté sur la figure 7C, permet une rotation du mécanisme qui se déplace vers une autre position voisine des dents asymétriques 22 et 23 des parties 20 et 21. Sur la figure 7D, les dents des parties 20 et 21 sont imbriquées dans une seconde position formant un assemblage déployé. Dans cette position, le système 4 autorise une course de déplacement L2 faible pour permettre au générateur à lame de fournir une seconde tension V2 basse.

La figure 8 représente la structure d'une lame d'un générateur de tension électrique pour un dispositif selon un mode de réalisation de l'invention. La lame est composée de structure multicouche comportant au moins une couche de lignes parallèles alternées de matériaux piézoélectrique 30 et d'isolant 31, de deux couches métalliques conductrices 33, et d'au moins une couche de polyimide. De préférence, la lame a une largeur comprise entre 5 et 30 millimètres (mm) et une longueur comprise entre 3 et 8 centimètres (cm).

La figure 9 représente un schéma électrique d'un dispositif selon un mode de réalisation de l'invention. L'élément générateur de tension électrique est représenté par une pile et le voyant de visualisation d'état est modélisé par un condensateur. Sur ce schéma, le dispositif comporte un circuit 40 de traitement électronique connecté à élément générateur de tension électrique et/ou au voyant de visualisation d'état. Le circuit de traitement peut comporter aussi une sortie 41 d'état ou de communication.

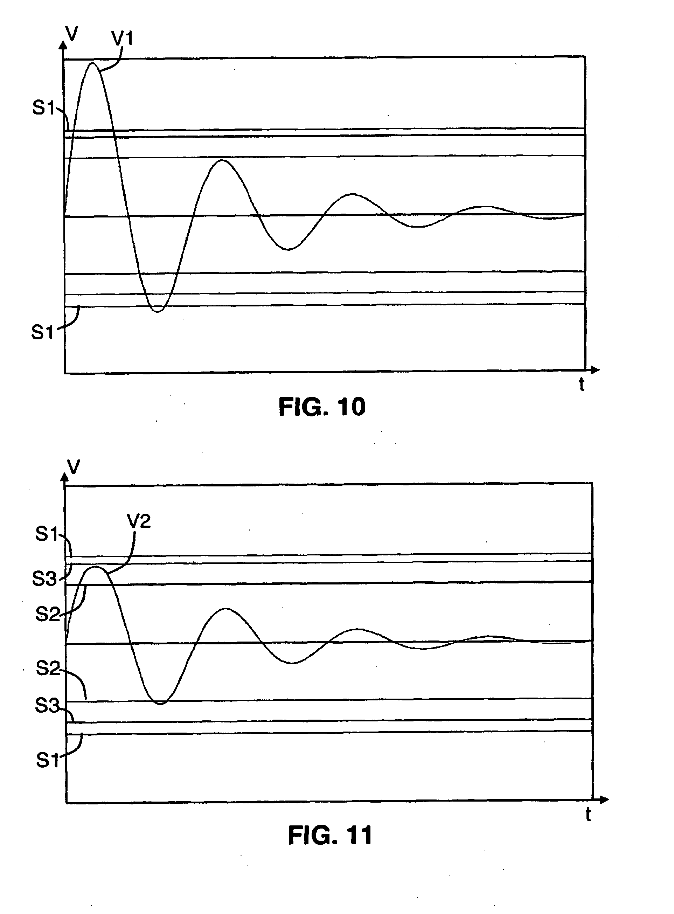

Les figures 10 et 11 représentent des courbes de tensions électriques pour les commandes de signalisation d'états actif ou inactif respectivement. Le voyant comportant un afficheur à deux états stables est commandé pour un premier état stable lorsqu'une tension de commande a une première amplitude V1 supérieure à un premier seuil S1 de tension et est commandé pour un second état stable lorsqu'une tension de commande ayant une seconde amplitude V2 est dans une plage comprise entre un second seuil bas S2 et une limite haute S3 inférieure audit premier seuil S1. Sur la figure 10, l'amplitude V1 est supérieure au seuil S1 pour commander l'état actif du voyant ou de l'afficheur. Sur la figure 11, l'amplitude V2 est entre le seuil S2 et la limite haute S3 pour commander l'état inactif du voyant ou de l'afficheur. Dans ce cas le seuil S1 n'est dépassé.

De préférence, L'amplitude V1 est de l'ordre de 30 volts et l'amplitude V2 est de l'ordre de 25 volts. Ces valeurs sont adaptées à un afficheur à cristaux liquides ayant deux couleurs différentes correspondant à chaque état stable et gardant son état après chaque commande. Le changement de couleur peut aussi correspondre à un état terne ou à un état réfléchissant par rapport à la lumière incidente. Les afficheurs gardent leur état après chaque commande sans requérir d'alimentation électrique supplémentaire. Avantageusement, un état actif est choisi dans l'état le plus lumineux de l'afficheur. L'actionnement de l'afficheur à cristaux liquides est fait de préférence sur les premières amplitudes ou premières alternances V1 et V2. Généralement, des secondes alternances du signal ne sont pas suffisantes en énergie et/ou en durée pour pouvoir actionner afficheur à cristaux liquides.

Le voyant est de préférence disposé sur la partie mobile mais il peut aussi être disposé sur la partie fixe. Il peut également être visible à travers la partie mobile quelque soit sa position.

## Revendications

1. Dispositif d'actionnement à voyant comportant :
- une partie fixe (1) servant de corps de boiter,
- une partie mobile (2) susceptible de se déplacer entre une position de repos et au moins une position active, et
- un voyant (3) de visualisation d'un état,
- au moins un élément (7) générateur de tension électrique disposé entre ladite piézoélectrique partie mobile (2) et ladite partie fixe (1) et pouvant recevoir au moins deux contraintes ou déformations dépendantes des dites au moins deux distances (D1, D2) de déplacement,
et ledit voyant (3) de visualisation d'état est connecté audit élément (7) générateur de tension et comporte un afficher à deux états stables
dispositif **caractérisé en ce qu'**il comporte :
- des moyens (4) de contrôle de déplacement de ladite partie (2) mobile par rapport à ladite partie fixe (1) pour contrôler séquentiellement au moins deux distances (D1, D2) de déplacement différentes entre deux actions consécutives, lesdits moyens de contrôle de déplacement comportant un système (20-23) à crémaillère rotatif changeant de longueur de course à chaque action.

2. Dispositif selon la revendication 1 **caractérisé en ce que** ledit afficheur (3) à deux états stables est un afficheur à cristaux liquides ayant deux couleurs ou aspects différents correspondant à chaque état stable et gardant son état après chaque commande.

3. Dispositif selon la revendication 2 **caractérisé en ce que** ledit afficheur (3) à deux états stables est commandé pour un premier état stable lorsqu'une tension de commande ayant une première amplitude (V1) est supérieure à un premier seuil de tension (S1) et est commandé pour un second état stable lorsqu'une tension de commande ayant une seconde amplitude (V2) est dans une plage comprise entre un second seuil bas (S2) et une limite haute (S3) inférieure audit premier seuil (S1).

4. Dispositif selon l'une quelconque des revendications 1 à 3 **caractérisé en ce que** ledit élément (7) générateur de tension est constitué d'une lame en matériau piézoélectrique.

5. Dispositif selon la revendication 4 **caractérisé en ce que** ladite lame (7) est déformable et fournit des tensions électriques dépendantes des distances de déplacement ou des déformations.

6. Dispositif selon l'une des revendications 4 ou 5 **caractérisé en ce que** lesdites deux distances de déplacement (D1, D2) sont destinées à actionner deux déformations de ladite lame (7), une première déformation générant ladite première amplitude (V1) de tension électrique de commande et une seconde déformation générant ladite seconde amplitude (V2) de tension électrique de commande.

7. Dispositif selon l'une quelconque des revendications 4 à 6 **caractérisé en ce que** ladite lame (7) est composée d'une structure multicouche comportant au moins une couche de lignes parallèle alternées de matériau piézoélectrique (30) et d'isolant (31), de deux couches métalliques conductrices (33), et d'au moins une couche de polyimide.

8. Dispositif selon l'une quelconque des revendications 4 à 7 **caractérisé en ce que** ladite lame (7) a une largeur comprise entre 5 et 30 millimètres (mm) et une longueur comprise entre 3 et 8 centimètres (cm).

9. Dispositif selon l'une quelconque des revendications 1 à 8 **caractérisé en ce que** ledit système à crémaillère comporte deux parties (20, 21) à dents complémentaires (22, 23) opérant une rotation lors du relâchement d'une action de commande.

10. Dispositif selon l'une quelconque des revendications 1 à 9 **caractérisé en ce qu'**il comporte des moyens (40) de traitement électroniques connectés audit élément (7) générateur de tension électrique et/ou audit voyant (3) de visualisation d'état.

11. Dispositif selon l'une quelconque des revendications 1 à 9 **caractérisé en ce que** ledit voyant (3) de visualisation d'état est disposé sur ladite partie mobile (2).

12. Bouton poussoir comportant un support, une partie coulissante par rapport au support et un ressort de rappel vers une position de repos disposé entre la partie mobile et le support **caractérisé en ce qu'**il comporte un dispositif d'actionnement à voyant selon l'une des revendications 1 à 11 dans lequel la partie mobile (2) est associée à la partie coulissante, la partie fixe (1) est associés au support, ledit voyant (3) de visualisation est visible à travers une face avant de la partie coulissante, et lesdits moyens (4) de contrôle de déplacement sont disposés en périphérie de la partie coulissante en contact avec le support.

## Patentansprüche

1. Betätigungselement mit Leuchtmelder, umfassend
- einen als Gehäusekörper dienenden feststehenden Teil (1),
- einen zwischen einer Ruhestellung und mindestens einer Arbeitsstellung verschiebbaren beweglichen Teil (2),
- einen Leuchtmelder (3) zur Anzeige eines Betriebzustands,
- mindestens ein spannungserzeugendes Piezoelement (7), das zwischen dem feststehenden Teil und dem beweglichen Teil angeordnet ist und mindestens zwei, von den genannten, mindestens zwei Verschiebeabständen (D1, D2) abhängige Beanspruchungen oder Verformungen erfahren kann, sowie den genannten Betriebszustands-Leuchtmelder (3), der an das genannte spannungserzeugende Element (7) angeschlossen ist und eine bistabile Anzeige umfasst,
welches Betätigungselement **dadurch gekennzeichnet ist, dass** es
- Mittel (4) zur Steuerung der Verschiebung des genannten beweglichen Teils (2) in Bezug zum feststehenden Teil (1) umfasst, welche Mittel dazu dienen, zwischen zwei aufeinanderfolgenden Betätigungshandlungen mindestens zwei unterschiedliche Verschiebeabstände (D1, D2) sequentiell zu steuern, wobei die genannten Verschiebe-Steuermittel ein drehwirksames Zahnstangensystem (20-23) umfassen, dessen Hubweg sich bei jeder Betätigungshandlung ändert.

2. Betätigungselement nach Anspruch 1, **dadurch gekennzeichnet, dass** die bistabile Anzeige (3) als LCD-Anzeige mit zwei unterschiedlichen, jeweils einem der stabilen Zustände entsprechenden Farben oder Darstellungen ausgebildet ist, wobei die Anzeige ihren Zustand nach jedem Steuerbefehl beibehält.

3. Betätigungselement nach Anspruch 2, **dadurch gekennzeichnet, dass** die genannte bistabile Anzeige (3) zur Annahme eines ersten stabilen Zustands angesteuert wird, wenn eine Steuerspannung mit einer ersten Amplitude (V1) einen ersten Spannungs-Schwellwert (S1) übersteigt, und zur Annahme eines zweiten stabilen Zustands angesteuert wird, wenn eine Steuerspannung mit einer zweiten Amplitude (V2) einen Wert innerhalb eines Bereichs zwischen einem zweiten unteren Schwellwert (S2) und einem oberen Grenzwert (S3) aufweist, wobei der Grenzwert unter dem genannten ersten Schwellwert liegt (S1).

4. Betätigungselement nach irgendeinem der Ansprüche 1 bis 3, **dadurch gekennzeichnet, dass** das genannte spannungserzeugende Element (7) als Streifen aus einem piezoelektrischen Material ausgebildet ist.

5. Betätigungselement nach Anspruch 4, **dadurch gekennzeichnet, dass** der genannte Streifen (7) verformbar ist und von den Verschiebeabständen bzw. den Verformungen abhängige elektrische Spannungen liefert.

6. Betätigungselement nach irgendeinem der Ansprüche 4 oder 5, **dadurch gekennzeichnet, dass** die genannten Verschiebeabstände (D1, D2) dazu dienen, zwei Verformungen des genannten Streifens (7) zu bewirken, wobei eine erste Verformung die genannte erste Steuerspannungs-Amplitude (V1) erzeugt und eine zweite Verformung die genannte zweite Steuerspannungs-Amplitude (V2) erzeugt.

7. Betätigungselement nach irgendeinem der Ansprüche 4 bis 6, **dadurch gekennzeichnet, dass** der genannte Streifen (7) einen Mehrschichtaufbau mit mindestens einer Schicht aus abwechselnd parallel angeordneten Strängen aus je einem piezoelektrischen Material (30) und einem Isolierstoff (31), zwei leitenden Metallschichten (33) sowie mindestens einer Poylmidschicht aufweist.

8. Betätigungselement nach irgendeinem der Ansprüche 4 bis 7, **dadurch gekennzeichnet, dass** der genannte Streifen (7) eine Breite zwischen 5 und 30 Millimetern (mm) sowie eine Länge zwischen 3 und 8 Zentimetern (cm) aufweist.

9. Betätigungselement nach irgendeinem der Ansprüche 1 bis 8, **dadurch gekennzeichnet, dass** das genannte Zahnstangensystem zwei Teile (20, 21) mit komplementärer Verzahnung (22, 23) aufweist, die beim Lösen einer Steuerhandlung drehwirksam zusammenwirken.

10. Betätigungselement nach irgendeinem der Ansprüche 1 bis 9, **dadurch gekennzeichnet, dass** es elektronische Verarbeitungsmittel (40) umfasst, die an das genannte spannungserzeugende Element (7) und/oder den Betriebszustands-Leuchtmelder (3) angeschlossen sind.

11. Betätigungselement nach irgendeinem der Ansprüche 1 bis 9, **dadurch gekennzeichnet, dass** der genannte Betriebszustands-Leuchtmelder (3) im genannten beweglichen Teil (2) angeordnet ist.

12. Drucktaster mit einem Träger, einem in Bezug zum Träger verschiebbaren Gleitteil und einer, zwischen dem beweglichen Teil und dem Träger angeordneten Rückstellfeder zur Rückführung in eine Ruhestellung **dadurch gekennzeichnet, dass** der Drucktaster ein Betätigungselement mit Leuchtmelder nach einem der Ansprüche 1 bis 11 umfasst, dessen beweglicher Teil (2) dem Gleitteil und dessen feststehender Teil (1) dem Träger zugeordnet sind, wobei der genannte Leuchtmelder (3) durch eine Vorderseite des Gleitteils hindurch sichtbar ist und die genannten Verschiebe-Steuermittel (4) am Umfang des Gleitteils, in Berührung mit dem Träger angeordnet sind.

## Claims

1. An actuating device with a light indicator comprising:
- a fixed part (1) acting as casing body,
- a movable part (2) able to move between a rest position and at least one active position, and
- a status display indicator (3),
- at least one piezoelectric electric voltage generating element (7) arranged between said movable part (2) and said fixed part (1) and able to receive at least two strains or deformations dependent on said at least two distances of movement (D1, D2),
and said status display indicator (3) is connected to said voltage generating element (7) and comprises a display with two stable states,
a device **characterized in that** it comprises:
- means (4) for controlling movement of said movable part (2) with respect to said fixed part (1) to sequentially control at least two different distances of movement (D1, D2) between two consecutive actions,
said means for controlling movement comprising a rotary rack system (20-23) changing length of travel at each action.

2. The device according to claim 1 **characterized in that** said display (3) with two stable states is a liquid crystal display having two different colours or aspects corresponding to each stable state and keeping its state after each command.

3. The device according to claim 2 **characterized in that** said display (3) with two stable states is commanded for a first stable state when a control voltage having a first amplitude (V1) is higher than a first voltage threshold (S1) and is commanded for a second stable state when a control voltage having a second amplitude (V2) is within a range comprised between a second low threshold (S2) and an upper limit (S3) lower than said threshold (S1).

4. The device according to any one of claims 1 to 3 **characterized in that** said voltage generating element (7) is formed by a blade made from piezoelectric material.

5. The device according to claim 4 **characterized in that** said blade (7) is deformable and supplies electric voltages dependent on the distances of movement or on the deformations.

6. The device according to one of claims 4 or 5 **characterized in that** said two distances of movement (D1, D2) are designed to actuate two deformations of said blade (7), a first deformation generating said first electric control voltage amplitude (V1) and a second deformation generating said second electric control voltage amplitude (V2).

7. The device according to any one of claims 4 to 6 **characterized in that** said blade (7) is composed of a multilayer structure comprising at least one layer of alternate parallel lines made from piezoelectric material (30) and from insulator (31), two conducting metal layers (33), and at least one layer of polyimide.

8. The device according to any one of claims 4 to 7 **characterized in that** said blade (7) has a width comprised between 5 and 30 millimetres (mm) and a length comprised between 3 and 8 centimetres (cm).

9. The device according to any one of claims 1 to 8 **characterized in that** said rack system comprises two parts (20, 21) with complementary teeth (22, 23) performing a rotation when a control action is released.

10. The device according to any one of claims 1 to 9 **characterized in that** it comprises electronic processing means (40) connected to said electric voltage generating element (7) and/or to said status display indicator (3).

11. The device according to any one of claims 1 to 9 **characterized in that** said status display indicator (3) is located on said movable part (2).

12. A push-button comprising a support, a part sliding with respect to the support and a return spring for returning to a rest position arranged between the movable part and the support, **characterized in that** it comprises an actuating device with a light indicator according to one of claims 1 to 11 wherein the movable part (2) is associated with the sliding part, the fixed part (1) is associated with the support, said display indicator (3) is visible through a front face of the sliding part, and said movement control means (4) are arranged at the periphery of the sliding part in contact with the support.
